# EUROPEAN PATENT SPECIFICATION

(11) **EP 3 626 337 B1**
(45) Date of publication and mention of the grant of the patent: **11.10.2023**
(21) Application number: 19203677.0
(22) Date of filing: 08.06.2017
(51) Int. Cl.: B01F 27/053, B01F 27/07, B01F 27/091, B01F 27/807, B01F 35/22, B01F 35/33, B01F 35/53, A47J 43/28

(54) **DETACHABLE RIB AND STIR TOOL FOR A MIXING BOWL**
ABNEHMBARE RIPPE UND RÜHRWERKZEUG FÜR EINE MISCHSCHÜSSEL
NERVURE DÉTACHABLE ET OUTIL DE FRICTION POUR BOL MÉLANGEUR

(30) Priority: 08.06.2016 GB 201610001
(43) Date of publication of application: 25.03.2020
(62) Divisional of application: 17730550.5
(73) Proprietor: Kenwood Limited, Havant, Hampshire PO9 2NH (GB)
(72) Inventor: WILLIAMS, David, Havant, Hampshire PO9 2NH (GB); JOHNS, Martin, Havant, Hampshire PO9 2NH (GB); PALMER, Andrew, Havant, Hampshire PO9 2NH (GB)
(74) Representative: Hector, Annabel Mary

(56) References cited:
- CN-Y- 2 150 723
- GB-A- 2 129 322
- GB-A- 2 480 302
- SE-B- 455 264
- US-A- 817 400
- US-A- 4 952 069
- US-A- 5 613 425

## Description

The present disclosure relates to a detachable rib and stir tool for use in a mixing bowl. More particularly, the present invention relates to a a stir tool with an adjustable extension.

### Background

Food processors are known which consist of a driveshaft that can be used to drive an interchangeable tool in a rotary motion. Different tools are available to provide different functions; for example whisking, chopping, stirring, mixing etc. The processor may be arranged to heat or cool ingredients in a bowl, or just mix them with no heating or cooling applied.

A commonly used tool is one which stirs ingredients within the enclosure. When heat or cooling is applied to the enclosure in order to cook or cool the ingredients it is desirable to generate motion amongst the ingredients in order to distribute the heat or coolness evenly and ensure uniform cooking or cooling. This stirring is commonly achieved by the use of a stirring tool with a stirring arm which is driven around the enclosure in a circular or planetary motion. This design of stir tool is generally effective at preventing ingredients from burning or freezing and sticking to the base of the enclosure.

The stirring tool can be driven from above, as in the case of stand mixers, or below, as in the case of food processors.

While being stirred in this way, ingredients often collect at the outermost edge of the stirring arm due to the centrifugal force of them being driven in rotational motion. The ingredients are collected as one mass at this edge and driven around the enclosure without being turned over, resulting in uneven cooking or cooling.

Moreover, whilst stir tools are often effective at scraping the bottom of a single container, where the container is replaced with another where the distance from the bottom of the container to the point of attachment of the tool is different, they cannot be easily adapted to this differing height.

It has been proposed to provide a tool which is sprung so that it is urged to touch the base of the bowl, but such tools have been found to lack robustness for stirring large quantities of food.

US5613425 shows an automatic stirring apparatus having a stirring device, in accordance with the preamble of claim 1, including lengths of chain. GB2480302 shows a beater with arms bearing a flexible blade like wiping member. SE455264 relates to a stirring tool supported by a horizontal bracket lockable to the inside of a cooker. CN2150723 shows manipulators fixed to a drive shaft of a powder mixing machine. GB2129322 relates to an automatic stirring device having an electric motor and an adjustable agitator. US 817400 is a hand operated dough mixer comprising a shaft mounted to a bridge member for fitting over the edges of a receptacle. US4952069 relates to a stirrer comprising a frame fixed to a drive shaft and having a bottom scraper segment.

### Statements of Invention

According to the invention, there is provided a stir tool for a food processing appliance according to claim 1, the stir tool comprising an elongate body having a scraping foot at one distal end for scraping working medium from the inside of a container of the food processing appliance, and a connector at the other distal end for attaching the stir tool to a food processing appliance to receive drive, and an extension distance adjustment mechanism for varying a distance between the connector and the scraping foot.

This allows the adaptation of the stir tool to differently dimensioned containers. The extension distance adjustment mechanism comprises a threaded element having a first thread, and an adjustment wheel having a second thread that engages with the first thread such that when the adjustment wheel is rotated it moves axially along the threaded element, and wherein the adjustment wheel is in mechanical communication with the scraping foot such that movement of the adjustment wheel axially along the threaded element results in variation of the distance between the scrapping foot and the connector. This allows the adjustment of the stir tool in continuous fashion.

The stir tool further comprises a locking element for selectively preventing the variation of the distance between the connector and the scraping foot. This allows the stir tool to be locked to prevent adjustment of the distance between the connector and the scraping foot.

Optionally, the locking element is selected from one of a locking nut, a clamp, and a pin that grips or applies pressure to the adjustment wheel to prevent its rotation. This allows the stir tool to be locked at any desired distance between the connector and the scraping foot.

Optionally the threaded element has one or more flat surfaces, and extends through a through-hole of the elongate body, wherein the one or more flat surfaces closely abut one or more corresponding flat surfaces within the through-hole, thus preventing relative rotation of the threaded element and the elongate body. This means that the stir tool may be kept at the same orientation relative to the connector whilst it's the distance between the connector and the scraping foot is adjusted.

A food processing appliance having a stir tool as defined above is also provided.

Optionally, the food processing appliance further comprises a processor, a user interface in electronic communication with the processor, a sensor in electronic communication with the processor for detecting information stored on a tag of a container attached to the food processing appliance, and a motor for driving the adjustment wheel to rotate that is controlled by the processor, wherein the processor controls the motor according to one of user input received from the user interface, and information stored on a tag of a container attached to the food processing appliance received by the sensor and transmitted to the processor.

### Summary of the Figures

Embodiments of the present disclosure will now be described, by way of example only and with reference to the accompanying drawings having like-reference numerals, in which:
Figure 1 illustrates an embodiment of a detachable rib;
Figure 2 illustrates an embodiment of a detachable rib;
Figure 3 illustrates a clip arrangement for the detachable rib in further detail;
Figure 4 illustrates the detachable rib fixed to a mixing bowl;
Figure 5 illustrates a close up view of the detachable rib fixed to a mixing bowl;
Figure 6 illustrates a side view of the detachable rib fixed to a mixing bowl;
Figure 7 illustrates a rear view of the detachable rib fixed to a mixing bowl;
Figure 8 illustrates a top view of the detachable fixed to a mixing bowl;
Figure 9 illustrates a perspective view of the detachable rib fixed to a mixing bowl;
Figure 10 illustrates an example of the detachable rib in use;
Figure 11 illustrates a step-by-step example of the detachable rib in use;
Figure 12 illustrates a front view of a further embodiment of the detachable rib;
Figure 13 illustrates a perspective view of a further embodiment of the detachable rib;
Figure 14 illustrates the further embodiment of the detachable rib fixed to a mixing bowl;
Figure 15 illustrates a rear view the further embodiment of the detachable rib fixed to a mixing bowl;
Figure 16 illustrates the further embodiment of the detachable rib in use within a mixing bowl;
Figure 17 illustrates a perspective view of an embodiment of a stir tool;
Figure 18 illustrates a detailed perspective view of a height-adjustment mechanism for the stir tool;
Figure 19 illustrates a top-down view of the stir tool;
Figure 20 illustrates a drive outlet to which the stir tool may be attached;
Figure 21 illustrates a food processor with the stir tool attached;
Figure 22 is a perspective view from one side of a stir tool according to another embodiment; and
Figure 23 is a perspective view from another side of the stir tool of Figure 22.

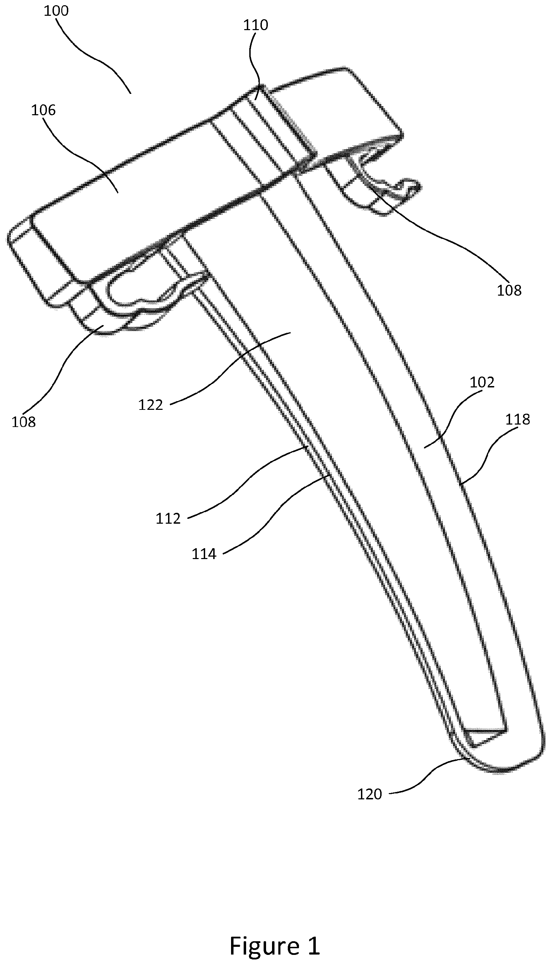

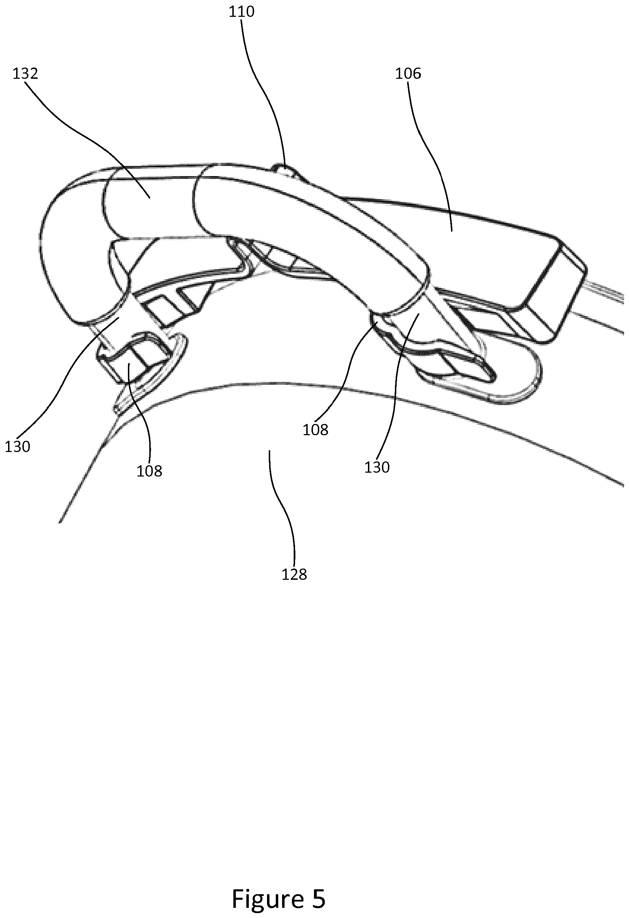

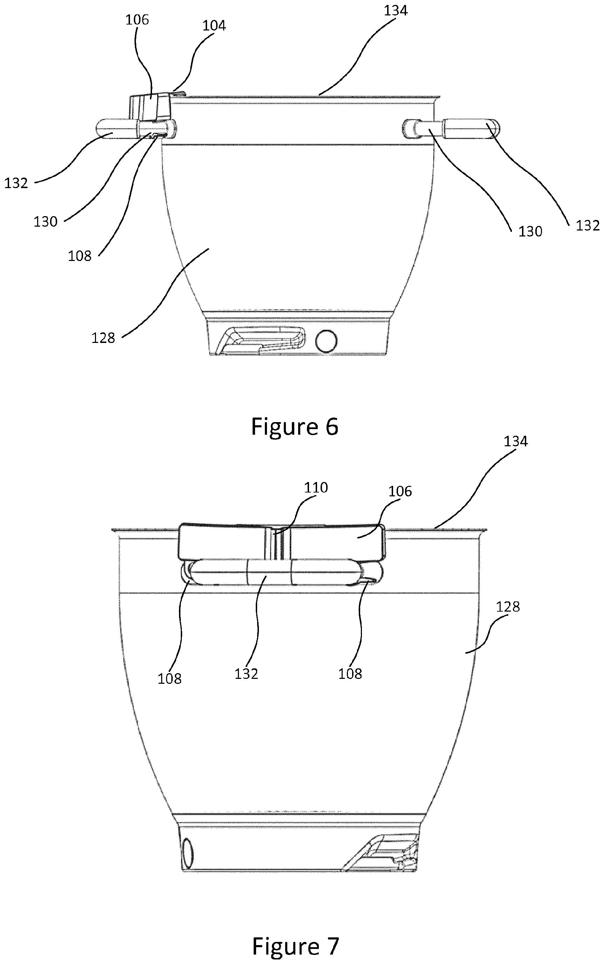

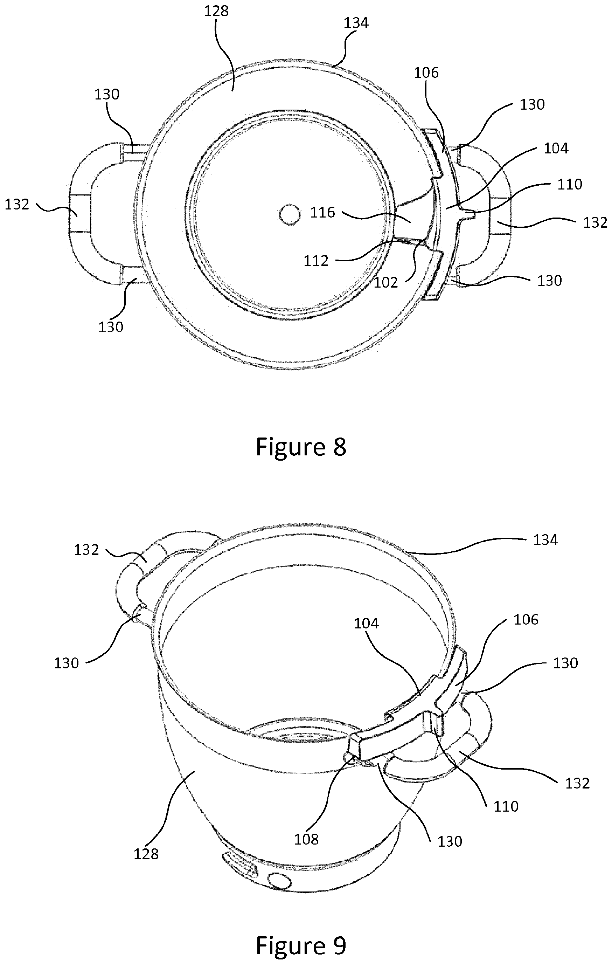

The detachable rib shown in figures 1-16 is not part of the claimed invention.

### Detailed description

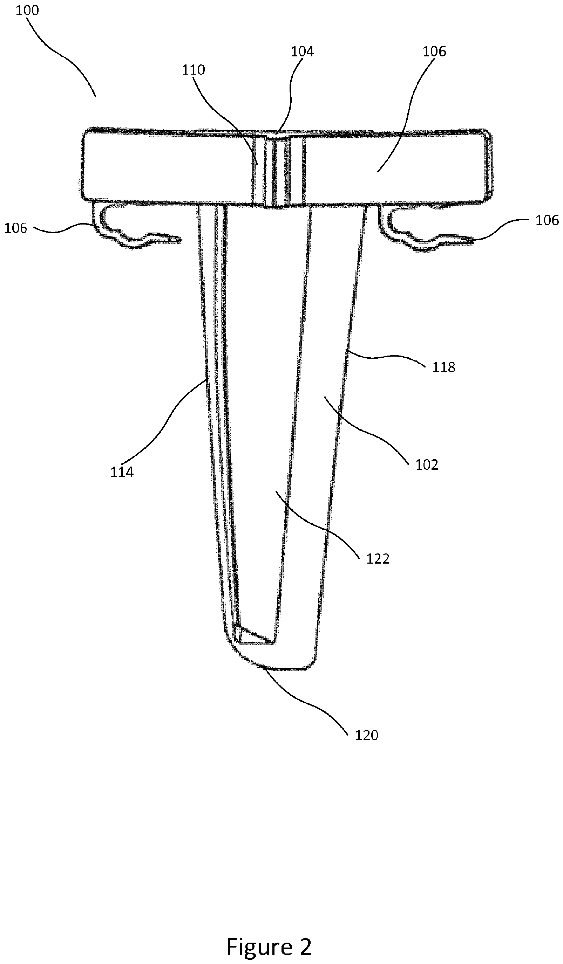

Referring to Figures 1 and 2, an exemplary embodiment of a detachable rib for a mixing bowl will now be described.

A detachable rib 100 is provided for use in a mixing bowl. The mixing bowl may form part of a kitchen appliance in which a stir or scraping tool is driven in rotational motion to stir or mix ingredients in the bowl, such as a stand mixer or food processor.

The detachable rib comprises an elongate body portion, comprising an elongate blade 102, descending from a connecting strip 104. The connecting strip 104 connects the elongate blade 102 to a clip support 106, from which two clips 108 descend. The clip support also comprises a clip grip 110.

The elongate blade 102 comprises a thick elongate edge, which presents a bluff face 112. The bluff face 112 forms an angle of at between about 50 degrees to 140 degrees to the side wall of the mixing bowl when in use, preferably approximately 90 degrees. The bluff face 112 may be straight or be curved along at least a portion of its length. The rear edge 114 of the bluff face 112 is shaped to conform to the inner bowl profile of the mixing bowl such that, when in use, the rear edge 114 is closely adjacent to the inner bowl surface, leaving little or no gap into which ingredients could become trapped.

A streamlined face 116 extends from the top of the bluff face 112 of the thick edge to a thin elongate edge 118 that runs along the opposite edge of the elongate blade 102 to the thick edge. The streamlined face 116 forms a shallow slope with an angle of less than approximately 45 degrees to the to the side wall of the mixing bowl when in use, preferably between 5 and 30 degrees. The streamlined face 116 can be straight or curved along at least a portion of its length, and can connect the elongate blade 102 substantially smoothly to the inner surface of the mixing bowl when in use. This allows the elongate blade 102 to be relatively strong in resisting forces applied to the detachable rib 100 by a stir tool in the mixing bowl, meaning it will not bend along its length. This shallow angle is also particularly advantageous in that it allows food to tumble along, and be rubbed against, the streamlined face 116 under the influence of the stir tool during processing, thus enhancing mixing and processing.

The blade 102 terminates in a rounded end 120 at its furthermost edge from the clip arrangement.

The back of the elongate blade 102 comprises an elongate supporting member 122, which extends along a portion of the elongate blade 102 to provide additional strengthening and to support the blade against an inner bowl surface when in use.

The elongate blade 102, or a portion of thereof, can be over moulded with a flexible seal, such as one made of plastic or rubber. The flexible seal can act to seal any gap between the mixing bowl and the elongate blade 102 when the detachable rib 100 is in use. This prevents the ingress of food between the elongate blade 102 and the inner surface of the mixing bowl when in use.

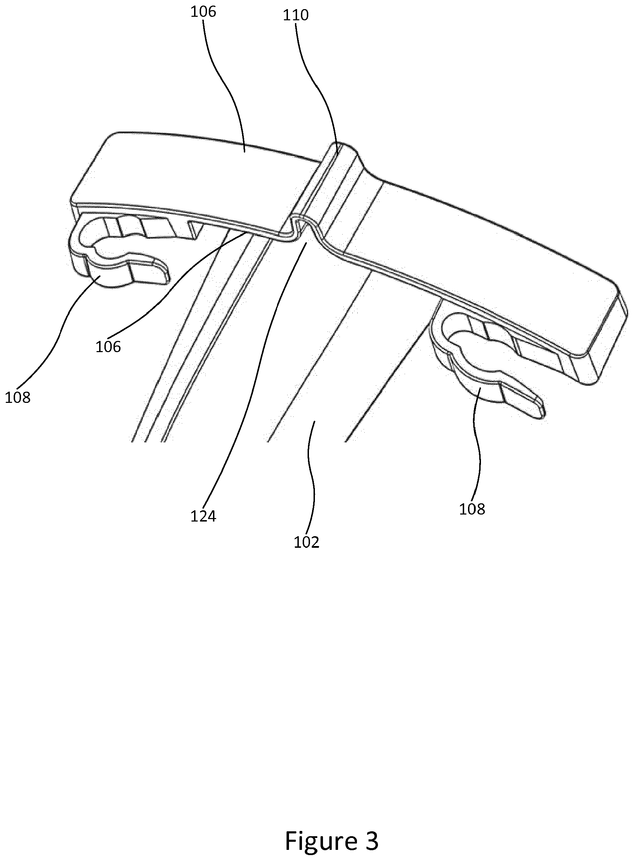

Figure 3 illustrates the clip arrangement of the detachable rib in further detail. The clip arrangement comprises a clip support 106 having an inner surface 124 with substantially the same curvature as the outside of the lip of a mixing bowl. The clips 108 provide an attachment formation which engages with a corresponding formation on the mixing bowl, in this case a mixing bowl handle. The detachable rib may thus be attached and detached to the mixing bowl, allowing use of the same mixing bowl for different tasks.

The clip arrangement further comprises two clips 108 that descend from the clip support 106. The two clips 108 are aligned such that the clips 108 are oriented in the same direction, by which it is meant that the clips are open on the same side. The two clips 108 serve to secure the detachable rib 100 to a mixing bowl by clipping onto the handle of the mixing bowl. Engaging with the mixing bowl handle in this way secures the detachable rib 100 against circumferential movement in one rotational direction.

A clip grip 110 protrudes from the centre of the clip support. The clip grip 110 can be used to facilitate the attachment and detachment of the detachable rib 100 to the handle of the mixing bowl. The clip grip can be an integral part of the clip support 106, or may alternatively be a separate part attached to the clip support 106. In this embodiment the clip grip 110 is integrally formed with the clip support 106, and comprises a protruding fold in the material of the clip support 106.

The connecting strip 104 (not visible in Figure 3) joins the elongate blade to the clip support 106. The connecting strip 104 extends from the top of the central portion of the clip support 106 to the top of the elongate blade, leaving a cavity 126 between the inner surface 124 of the clip support 106 and the upper part of the back of the elongate blade 102.

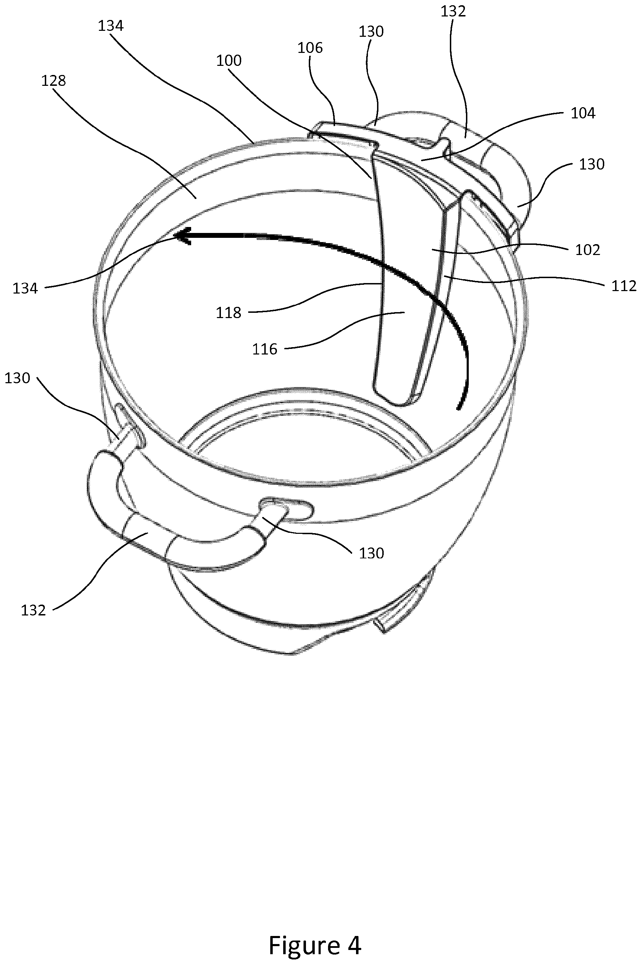

Figures 4 to 9 illustrate the detachable rib fixed to a mixing bowl. The detachable rib 100 is secured to a mixing bowl 128 by means of the clips 108 that descend from the clip support 106. Each of the clips 108 is clipped onto one of the legs 130 of the mixing bowl handle 132, preferably to the exposed metal rather than over an over moulded plastic grip, if present. The clips 108 secure the detachable rib 100 to the mixing bowl handle 132 against the direction of rotation 134 of a mixing tool within the mixing bowl 128, shown by the arrow in Figure 4, preventing the motion of the mixing tool from detaching the detachable rib 100 from the mixing bowl handle 132. The clips 108 secure the rib against circumferential movement in the rotational direction of the mixing tool within the mixing bowl 128. The clip grip 110 facilitates the detachment of the detachable rib 100 from the mixing bowl 128 by providing a convenient grip for a user. The user pushes the clip grip 110 in the opposite direction to that in which ingredients are driven in the bowl (i.e. in the opposite direction to the arrow in Figure 4) in order to detach the clips from the legs 130 of the mixing bowl handle 132.

The elongate body comprising the elongate blade 102 descends into the mixing bowl 128 from the connecting strip 104, and extends downwards along a substantial portion of the inner bowl surface. The elongate blade 102 is arranged to extend in a substantially axial direction along an inner surface of the mixing bowl 128. The bluff face 112 formed by the thick elongate edge is, in this embodiment, presented to the direction from which ingredients are driven by the mixing tool, forming an obstacle to the path of the ingredients. The streamlined face 116 provides a shallow slope down which ingredients can tumble, thus enhancing mixing, when being driven by the stir tool, and substantially smoothly joins the elongate blade 102 to the inner surface of the mixing bowl 128 at the thin elongate edge 118 of the elongate blade 102.

The connecting strip 104 extends over the rim 134 of the mixing bowl 128, connecting the elongate body comprising the elongate blade 102 to the clip support 106. The elongate blade 102 descends into the mixing bowl 128 from the connecting strip 104, and the clip support 106 descends from the connecting strip 104 on the outside of the mixing bowl 128. In the embodiment shown, the connecting strip 104 attaches the whole width of the top of the elongate blade 102 to a portion of the clip support 106. The connecting strip 104 can be made sufficiently thin such that a lid of the mixing bowl 128 can be used without substantial interference by the detachable rib 100. For example, the connecting strip may be 2mm or less thick, and more preferably approximately 1mm or less thick.

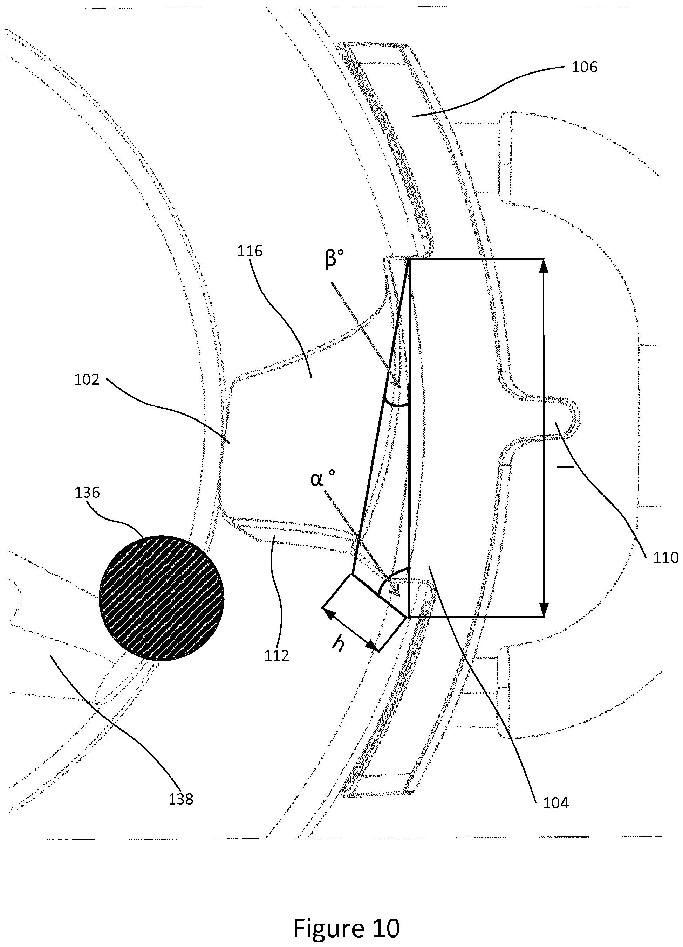

Figure 10 illustrates an example of the detachable rib in use. Ingredients 136 are driven around the inside of the mixing bowl 128 by a stir tool 138. The centrifugal force of this motion causes the ingredients 136 to move radially outwards along the stir tool 138 and build up at the edge of the mixing bowl 128. Furthermore, stir tools 136 often have an angled blade or scraper presented to the ingredients 136 in the mixing bowl which pushes the ingredients around the mixing bowl. The angled nature of the blade inhibits the ingredients 136 from falling over the trailing edge of the blade, thereby causing the ingredients 136 to build up in a mass at the outermost edge of the blade. This prevents the ingredients 136 from being effectively mixed.

In the embodiment shown, the bluff face 112 of the elongate blade 102 provides an obstacle to the path of the driven ingredients 136 that projects into the mixing bowl. The bluff face 112 presented by the thick edge extends into the bowl a distance h, which is between about 20mm and 5mm, preferably between about 7mm and 12 mm, and more preferably about Omm.The bluff face 112 forms an angle a with the edge of the mixing bowl of between about 50 and 140 degrees, preferable between about 70 and 110 degrees, and more preferably about 90 degrees.

In the embodiment shown, the trailing face of the elongate blade 102 is provided by the streamlined face 116 of the elongate blade 102. The streamlined face 116 forms an angle *β* with the edge of the mixing bowl at the thin elongate edge of less than about 45 degrees, preferable between about 5 and 30 degrees, and more preferably between about 5 and 10 degrees.

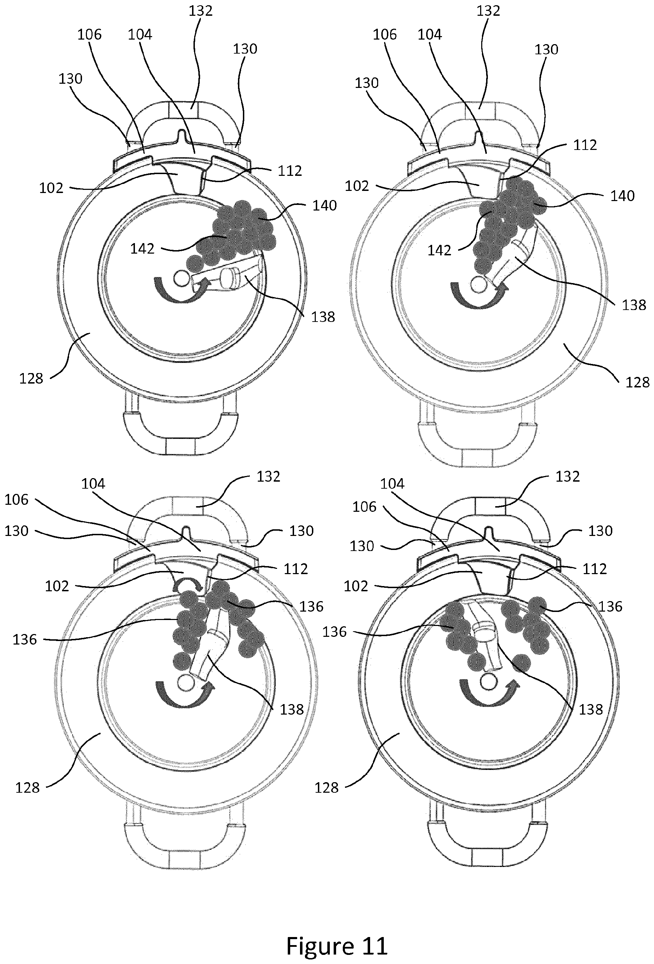

Figure 11 illustrates a step-by-step example of the detachable rib in use. The elongate blade 102 of the detachable rib provides an obstacle to the path of the outer ingredients 140 that build up at the outer edge of the stir tool 138 blade. The elongate blade 102 acts to interrupt the motion of the outer ingredients 140 and 'pinches' them in co-operation with the stir tool 138 into two portions of ingredients 140 and 142, causing at least a portion of them to be forced over the trailing edge of the stir tool 138 blade. The inner ingredients 142 that have not yet been forced to the edge of the bowl tumble over the back of the trailing face of the elongate blade 102. In the embodiment shown in figures 1 to 3 it is the bluff face 112 of the elongate blade 102 that provides the obstacle. Ingredients 140 being pushed around the outer edge of the mixing bowl are prevented from continuing to be driven around the mixing bowl 128 by the bluff face 112 and fall into the middle of the mixing bowl 128, turning over as they do so, once stir tool 138 has passed the bluff face 112. The streamlined face provides the trailing edge over which the inner ingredients 142 tumble. As the stir tool 138 drives the inner ingredients 142 remaining on the stir tool blade in rotational motion some of the ingredients are pushed outward by the centrifugal force of the rotation, and build up at the edge of the mixing bowl, becoming a new set of outer ingredients 142.

The elongate body comprising the elongate blade 102 of the detachable rib has a length such that in use the stir tool 138 blade can pass underneath it uninhibited. For example it may have a length such that a clearance of between 10mm and 20mm if formed between the elongate blade 102 and an element of the stir tool 138 in contact with the bottom of the mixing bowl 128 (e.g., a scrapping element). Alternatively, the stir tool 138 may be formed with a flexible element along its outside edge that wipes across the elongate blade 102 as it rotates, thus eliminating the gap separating the elongate blade and the stir tool 138. The rounded bottom 120 of the elongate blade 102 acts to encourage the downward motion of ingredients 136 around the bottom 120, thus enhancing mixing and acting to prevent the furthermost edge from the clip arrangement trapping food. The blade 102 may also be shaped such that it conforms to the shape of the stir tool 138, maintaining a substantially even clearance from the stir tool 138.

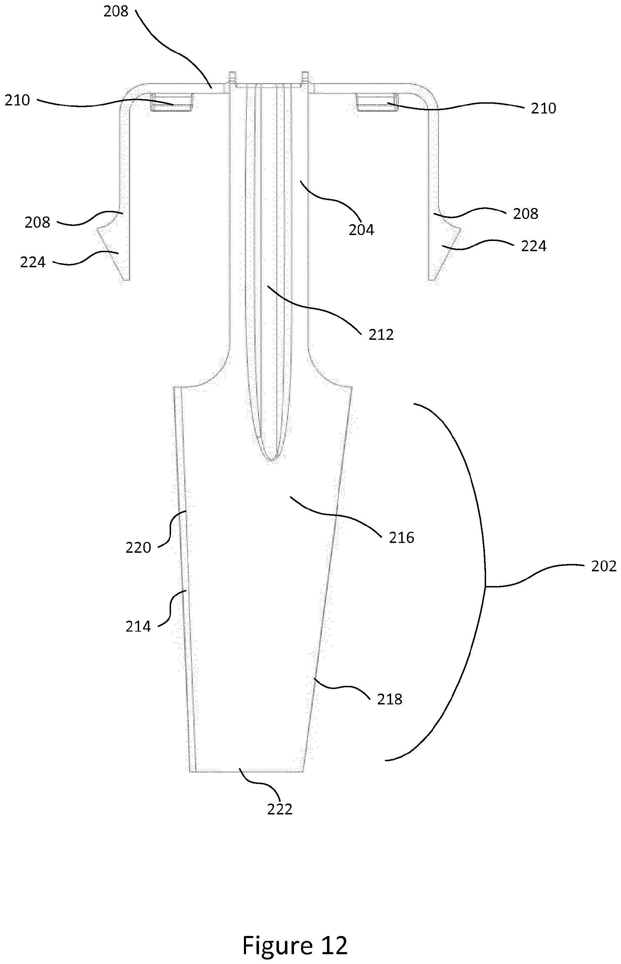

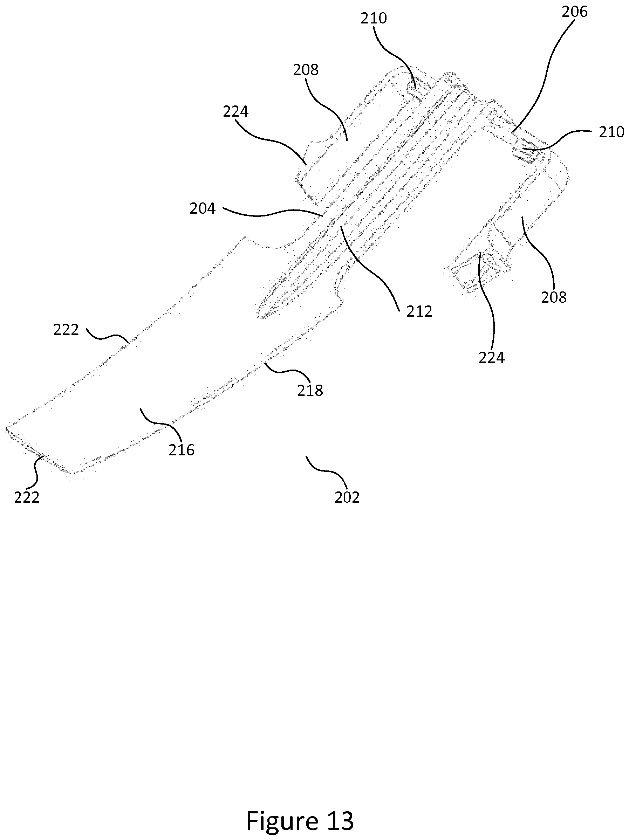

A further embodiment of the detachable rib is shown in figures 12 and 13. in this embodiment, an elongate body comprising an elongate blade 202 descends from a connecting strip 204. The connecting strip connects the elongate blade to a clip support 206, from which two clips descend 208 at either end of the clip support 206. Two securing tabs 210 also descend from the clip support 206.

The connecting strip 204 extends from the top of the clip support 206 before curving downwards, such that it will enter a mixing bowl when in use. The connecting strip 204 joins the top of the elongate blade 202 smoothly. An elongate reinforcing member 212, in this case a column, extends along the central axis of the connecting strip 204 and partially along the elongate blade 202.

The elongate blade comprises a bluff face 214 presented by a thick edge and a shallow streamlined face 216. The shallow streamlined face 216 extends from a thin elongate edge 218 of the elongate blade to the thick edge, where it joins the bluff face 214. The thin elongate edge 218 can be at an angle to the axis along the centre of the connecting strip, for example as shown in the embodiments in Figures 12 and 13, but alternatively can be parallel to that axis. The elongate blade 202 is curved along its length, so as to lie closely adjacent to an inner surface of a mixing bowl when in use, and terminates in a straight edge 222 at the distal end of the elongate blade 202 from the connecting strip 204.

The clips 208 extend downwards from either end of the clip support 206, and in the embodiment shown are integrally formed with the clip support 206. The clips 208 are formed from a sprung material such that they are urged to return to the position shown in Figures 12 and 13 relative to the clip support 206 (i.e. perpendicular to the clip support 206). The end of each the clips 208 comprises a hooked head 224 for engaging with a handle of a mixing bowl. The face of each hooked head 224 nearest the clip support 206 is curved in a direction away from the other clip to form a partial hook shape. The rest of each hooked head comprises a wedge. The clips 208 form an attachment formation for engaging with a corresponding formation on a mixing bowl, which in this embodiment is the mixing bowl handle.

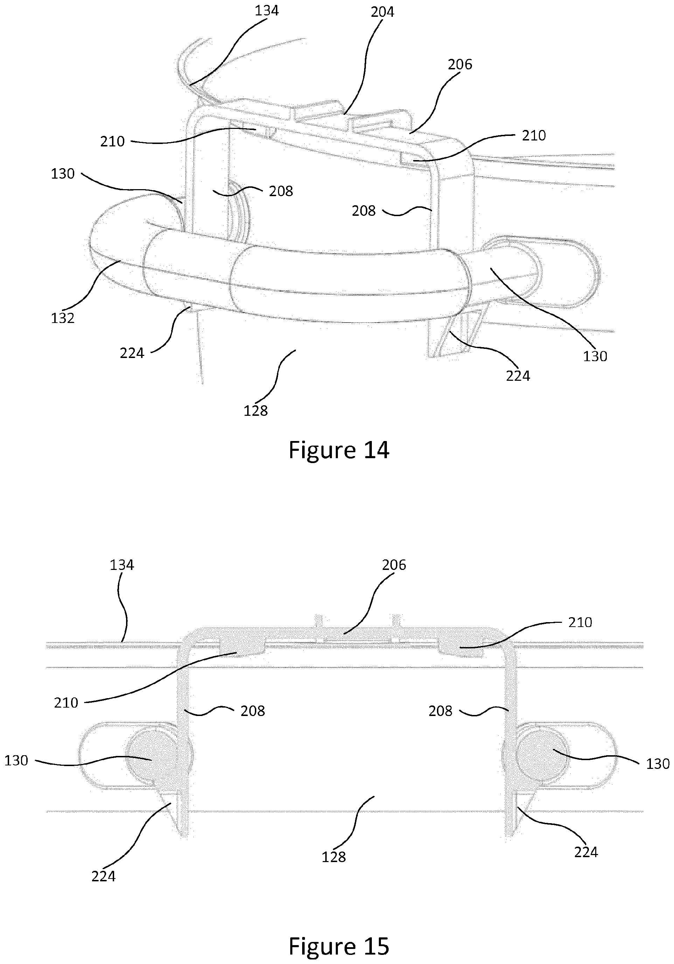

Figures 14 and 15 illustrate the further embodiment of the detachable rib attached to a handle of a mixing bowl. The clips 208 secure the detachable rib against the legs 130 of the mixing bowl handle 132 by means of the sprung nature of the clips 208. This secures the detachable rib against circumferential movement around the mixing bowl 128 in two rotational directions around the mixing bowl. The curved face of the hooked head 224 of each of the clips 208 extends around at least a portion of the underside of the legs 130 of the mixing bowl handle 132 to prevent upward vertical motion of the detachable rib relative to the mixing bowl 128. The securing tabs 210 that descend from the clip support 206 secure the detachable rib to the rim 134 of the mixing bowl 128, preventing downward vertical motion of the detachable rib relative to the mixing bowl 128.

The detachable rib is secured to the mixing bowl 128 by first placing the elongate blade 102 into the mixing bowl 128 such that the clip support 204 and clips 208 remain on the outside, and the wedges of the hooked heads 224 of the clips 208 each rest on one of the legs 130 of the mixing bowl handle 132. Applying a downward force to the top of the clip support 206 causes the clips 208 to flex toward each other due to the resulting force applied to each of the wedges of the hooked heads 224 by the legs 130 of the mixing bowl handle 132. Once the wedges have passed the legs 130 of the mixing bowl handle 132, the sprung nature of the clips 208 returns the clips 208 to their original position relative to the clip support 206. In doing so, the curved face of the hooked heads 224 of each clip 208 secure the detachable rib against the legs 130 of the mixing bowl handle 132. The clip support 206 is prevented from being pushed further downwards by the securing tabs 210.

Arranging the clips in this way secures the detachable rib against rotational motion in both circumferential directions within the mixing bowl 128, as each clip acts against one of the legs 130 of the mixing bowl handle 132 to provide a force resisting forces applied in that direction. In this way, the detachable rib can be used with a mixing tool that rotates in either direction within the mixing bowl.

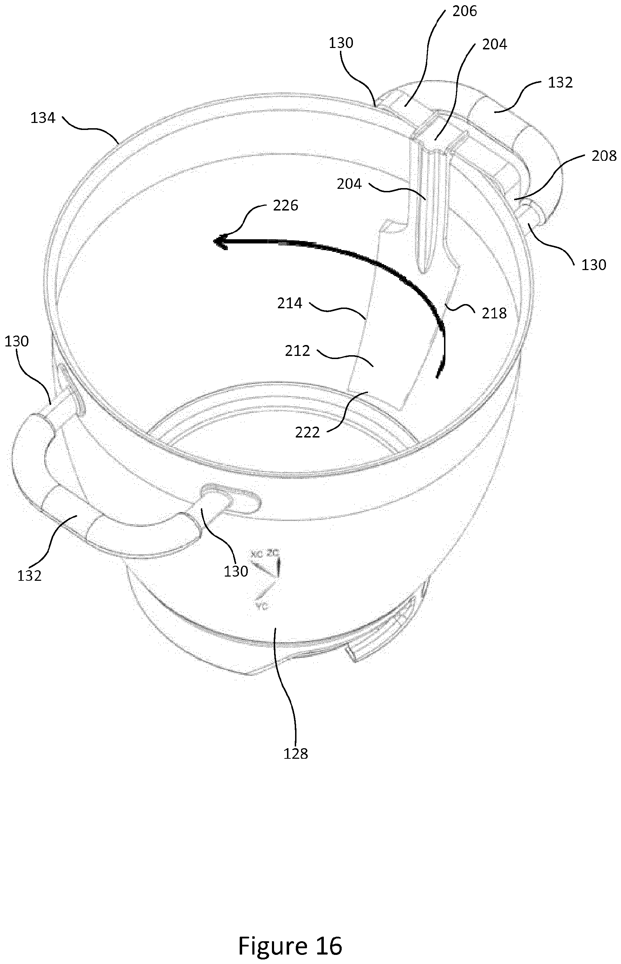

Figure 16 illustrates the further embodiment of the detachable rib in use within a mixing bowl. The direction of motion of a mixing tool within the bowl is shown by the arrow 226, though in this embodiment it could alternatively be in the other direction. In the embodiment shown the shallow streamlined face 212 is presented to ingredients being driven around the bowl by a mixing tool. The shallow streamlined face 212 forces ingredients being pushed around the inner circumference of the mixing bowl 128 inwards into the mixing bowl, away from the inner bowl surface. When the ingredients are urged over the thick edge 214 of the elongate blade, they can tumble over the bluff face of the elongate blade. This can lead to enhanced mixing of the ingredients.

The clips 208 secured against the legs 130 of the mixing bowl handle 132 prevent the force of the ingredients being pushed against the elongate blade by the mixing tool from causing the detachable rib to pushed around the inside of the mixing bowl 128.

The elongate blade does not extend to the base of the mixing bowl, but terminates in the straight edge 222 a height above the base of the mixing bowl sufficient to allow passage of the mixing tool underneath the elongate rib.

The ingredients can alternatively be driven in rotational motion in the opposite direction to that shown in Figure 16, in which case the bluff face formed by the thick elongate edge of the elongate blade is presented to the ingredients and the detachable rib acts as described in relation to Figures 10 and 11. The double clip arrangement of the embodiment shown in Figures 11 to 16 allows for either direction to be used.

In the embodiments shown in Figures 1 to 16, the detachable rib is arranged to be attached to a mixing by means of clips which attach to the handle of the mixing bowl. However, the use of other attachment formations on the detachable rib to engage with a corresponding formation on the mixing bowl is possible. For example, a clamp on the detachable rib can be used as the attachment formation instead of the clips, with the corresponding formation on the bowl being a fixing post formed within the bowl. Alternatively, the attachment formation can be a screw on the detachable rib that engages with a threaded hole in the mixing bowl, or vice versa. A further example is to have magnets acting as both the attachment formation on the detachable rib and the corresponding formation on the mixing bowl. Many other examples are possible.

At least the parts of the detachable rib expected to come into contact with food can be formed of a food safe material, such as fibreglass, nylon, injection moulded plastic or stainless steel. The whole detachable rib can be integrally formed, or formed from different sections, which may comprise different materials. For example, the elongate blade can be formed from stainless steel, while the clips are formed from plastic. Preferably, the detachable rib is formed from heat resistant material to allow for the use of the detachable rib in a heated mixing bowl.

The detachable rib can also include a communication element to inform a kitchen appliance of the presence of the detachable rib within the bowl. This can be, for example, a RFID tag or NFC tag in the detachable rib that communicates with a sensor in the mixing bowl or kitchen appliance, or a magnetic element in the detachable rib that triggers a reed switch on the mixing bowl. The presence of the detachable rib can thereby be detected by the kitchen appliance, and displayed to a user via a user interface on the kitchen appliance. Tools for use in the kitchen appliance that work with the detachable rib may also have such communication means, and can indicate to the kitchen appliance the need for the user to attach the detachable rib to the mixing bowl. Tools that are incompatible with the detachable rib may also have such communication means, and indicate to a user the need to remove the detachable rib, if present, before using the kitchen appliance with that tool. The kitchen appliance may further be arranged to configure itself to operate in a particular mode and/or at a particular speed on detection of the detachable rib.

Multiple detachable ribs may be provided in a kit. These ribs may be of differing dimensions (e.g., they may extend into the bowl by differing thicknesses) and shapes so as to cater for differing ingredients, and have differing chirality so as to present bluff faces in differing directions.

Whilst a detachable rib is shown in Figures 1 to 16, the advantageous shape of the detachable rib shown in Figures 1 to 16 may also be used in one or more ribs that are integrally formed with the bowl. These ribs may be formed so as to be symmetrically spaced about the inside of the bowl so as to balance it, and may, where two or more ribs are used, be formed with bluff faces facing in differing directions (e.g., one rib may have a bluff face facing clockwise and another may have a bluff face facing anti-clockwise) to enable the use of a reversible motor (i.e., a motor that may selectively drive a mixing/cutting/blending tool to rotate either clockwise or anticlockwise) with the bowl. Whilst a mixing bowl is described here, any chamber or cavity in which food mixing or processing is to take place (including, for example, the bell of a hand-blender or a blender goblet) may have such ribs formed within it.

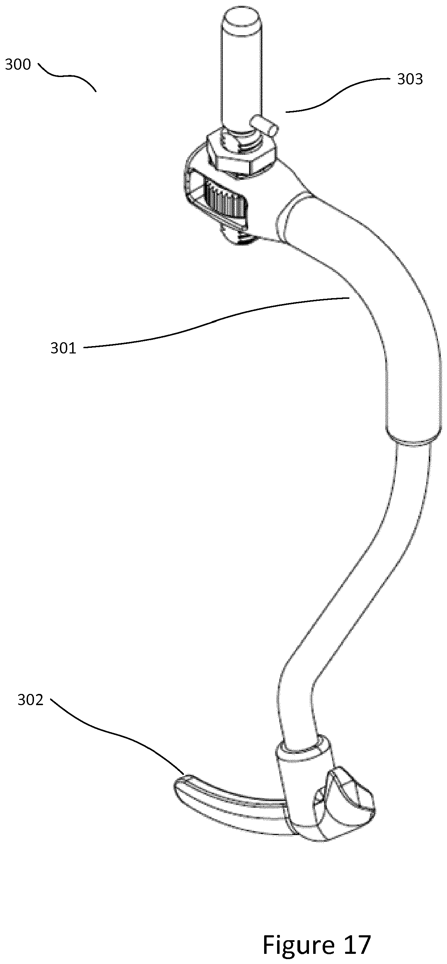

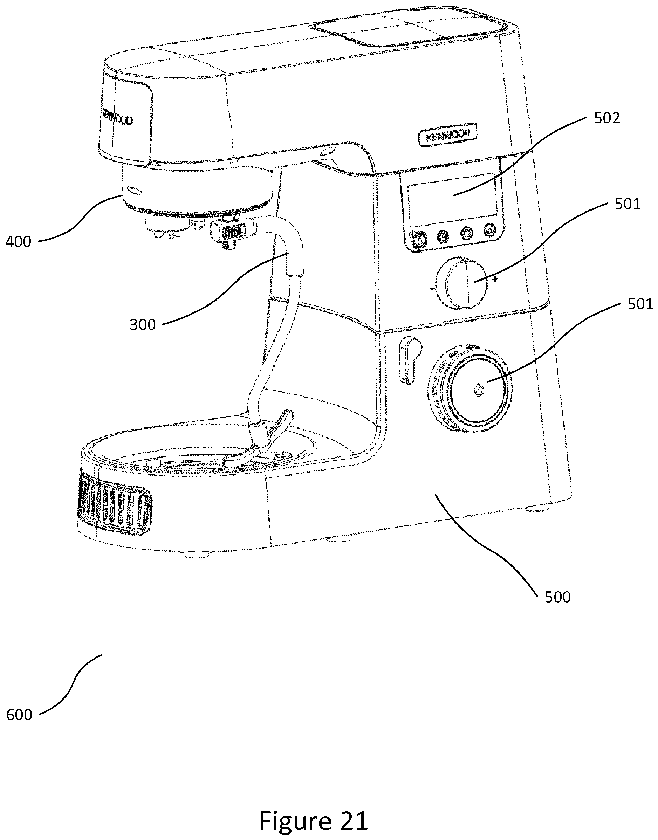

An exemplary stir tool 300 which may be used in combination with the detachable rib is shown in Figs. 17-19. Stir tool 300 has an elongate S or C-shaped curved upper body 301 that attaches to the food processing machine with which it is used (e.g., a stand mixer such as that shown in Fig. 21) at its upper end via the attachment mechanism 303, and to a stirring foot 302 that scrapes the container with which it is used at its lower end. The upper body and foot form a first member. The attachment mechanism forms a second member, which is relatively moveable in relation to the first member by an adjustment mechanism. The upper body 301 and attachment mechanism 303 can be made of a relatively rigid material such as stainless steel, with the upper body 301 either partly or wholly over-moulded with a heat-resistant plastic to facilitate handling after heating. The foot 302 can be made of a relatively durable and heat-resistant material, such as a plastic such as a polyetherimide (e.g., Ultem^{™}) for with standing heats of 180-200°C without significant deformation.

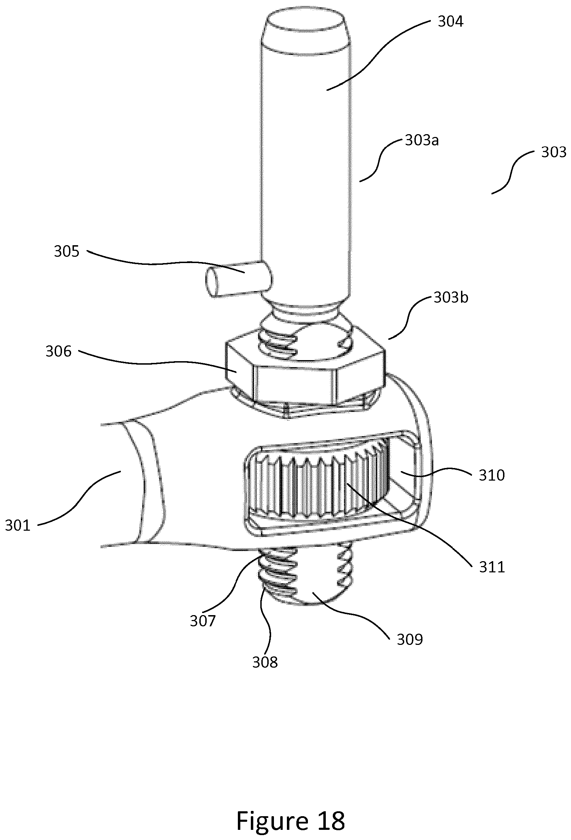

Detail of the attachment mechanism 303 can be seen in Fig. 18. At its upper end the attachment mechanism 303 has a connector 303a that is connectable to a food processing machine via a cylinder-shaped spigot 304 and locating pin 305 extending radially from the spigot 304 that locks into a corresponding socket in the food processing machine in bayonet-and-socket fashion so as to depend downwardly from the food processing machine and receive drive from it. Whilst a bayonet fitting is used here as an example, other fittings may be used, including snap-fittings and screw-fittings.

The lower end of the spigot 304 is connected to a height adjustment mechanism 303b. The height adjustment mechanism 303b has a cylinder-shaped threaded element 307 extending co-axially from the spigot 304. The threaded element 307 extends through a vertical through-hole 312 defined vertically (i.e., in the primary direction of extension of the stir tool 300 as a whole) through the upper body 301 at a point where the curve of upper body 301 is such that it extends horizontally at an approximate right-angle to the threaded element 307. The threaded element 307 is preferably dimensioned such that, when located in the vertical through-hole 312, it can extend both above and below the vertical through-hole 312 to permit upward and downward movement.

The threaded element 307 has, at different points on its surface, threaded sections 308 having screw-thread, and flat sections 309 without screw-thread. In this example the threaded sections 308 are located on opposite sides of the threaded element 307, and the flat sections 309 are also located on opposite sides of the threaded element 307.

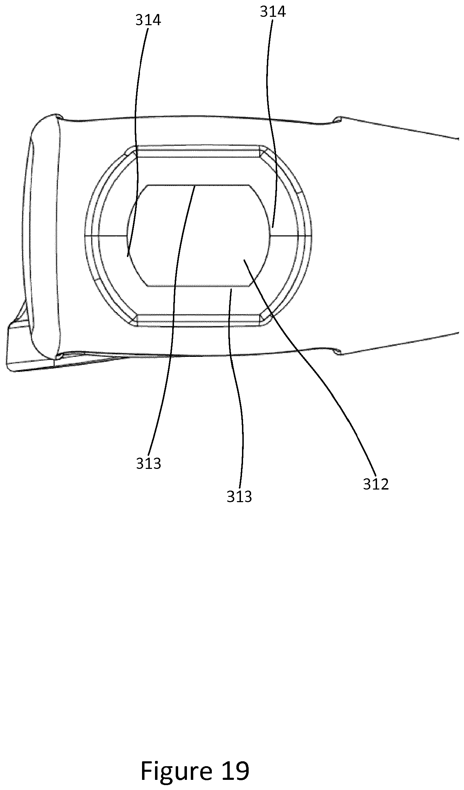

As can be seen in Fig. 19, the vertical through-hole 312 has arcuate wall-sections 314 and straight wall-sections 313, The arcuate wall-sections 314 extend at right-angles to the direction of extension of the upper body 301, and the straight wall-sections 313 extend parallel to the direction of extension of the upper body 301, The vertical through-hole 312 is dimensioned such that when the threaded element 307 is located within the vertical through-hole 307, the flat wall-sections 313 closely abut the flat section 309 thus preventing rotation of the threaded element 307 within the vertical through-hole 312. Particularly when the stir tool 300 is driven in circular fashion, it is desirable that its orientation of the tool 300 relative to the container does not change whilst height is adjusted as this may impact the contact between the scraping foot 302 and the base of the container.

A horizontal through-hole 310 is defined horizontally through the upper body 301 at the same axial location as the vertical through-hole 312. The horizontal through-hole 310 is defined through the upper body 301 such that it extends at right angles both to the downwardly-depending threaded element 307 and to the horizontally-extending upper body 301, and crosses the vertical through-hole 312 at a right angle.

An annular adjustment wheel 311 is located within the horizontal through-hole 310 so as to be concentric with the vertical through-hole 312 and dimensioned so as to accommodate the insertion of the threaded element 307 through its central hole. The inside surface of the adjustment wheel 311 has screw-thread matching and engaging with the screw-thread of the threaded sections 308 such that, when the adjustment wheel 311 is rotated, the adjustment wheel 311 moves axially along the threaded element 307 to any desired position along the threaded element 307. The outside surface of the adjustment wheel 311 is roughened so at to facilitate gripping by the user during turning, and is accessible to the user through the horizontal through-hole 310.

Since the threaded element 307 cannot rotate relative to the vertical through-hole 312 movement of the adjustment wheel 311 along the threaded element 307 results in the upper body 301 and the foot 302 also moving axially along the threaded element 307 so as to allow the raising/lowering of the foot 302 to adapt to different containers without changing the orientation of the tool 300. This ensures proper scraping of the bottom of different containers by the foot 302 regardless of the container used.

A locking nut 306 having a thread which engages with the thread of the threaded sections 308 is located on the threaded element 307 either above or below the vertical through-hole 312. When it is desired to lock the threaded element 307 in place, the locking nut is rotated until it applies pressure to the upper body 301, which in turn applies pressure to the adjustment wheel 311, preventing it from being turned. When it is desired to raise or lower the foot 302, the locking nut 306 can be rotated so as to loosen it. Whilst a locking nut is shown here for exemplary purposes, other locking elements may be used, including pegs or clamps which attach/grip the adjustment wheel 311 to prevent its rotation.

Particularly (but not exclusively) where soft materials are to be processed, to further enhance the contact between the foot 302 and the container with which it is being used, the upper body 301 may be made of a resilient material such as, for example, a resilient polymer, or spring steel. Additionally or alternatively either the socket on the food processor or the spigot 304 may be spring-loaded by a resilient element such as a helical spring so as to push the foot more firmly against a bottom of the container.

However, it may be that where hard, possibly burnt-on material is to be scraped away a rigid construction is desired as this will not yield or move upwardly when coming into contact with hard material. In this case resilient elements may be omitted and the upper body 301 can be made of a stiff material such as a stiff polymer or metal such as stainless steel.

Whilst a primarily vertically-extending stir tool 300 has been shown here for exemplary purposes, the stir tool may instead extend in a primarily horizontal direction so as to contact a side-wall of the container. In this case the height adjustment mechanism 303b would instead be arranged horizontally so as to vary the radial extension of the foot 302 away from the drive to which it attaches to adjust for differently-sized containers. Indeed, two adjustment mechanisms may be provided, one to vary the horizontal extension of the tool, and the other to vary the vertical extension of the tool.

Whilst the connector 303a and the height adjustment mechanism 303b are shown as being located adjacent each other at the top of the stir tool 300 so as to avoid food ingress into the height adjustment mechanism 303b impairing its performance, the height adjustment mechanism may be located anywhere along the upper body 301.

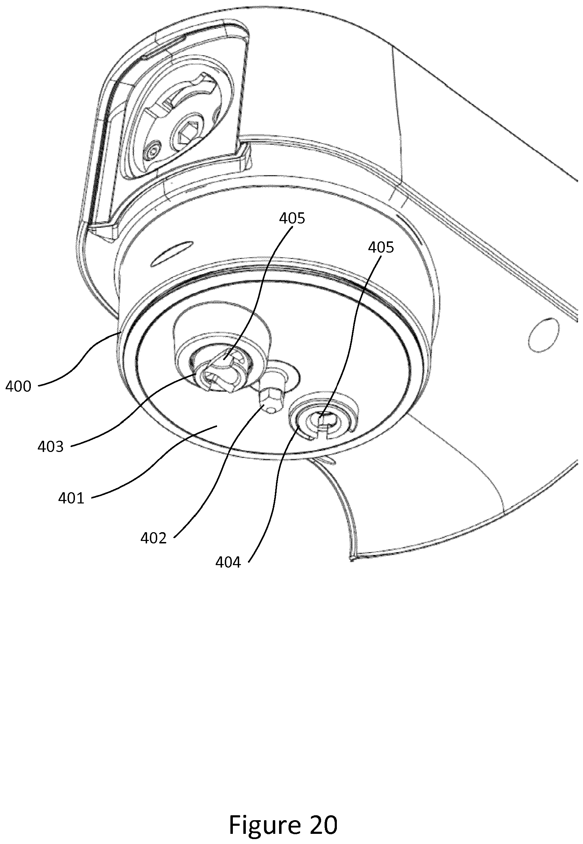

Fig. 20 shows an exemplary drive outlet 400 to which the stir tool 300 may be attached. The drive outlet 400 has two sockets to which the stir tool 300 may be attached - a planetary-drive outlet 403 and a circular-drive outlet 404, each of which has locating holes 405 into which the locating pin 305 of a tool may be fitted. Both drive outlets 403 and 404 depend from a circular driving plate 401 that is driven to rotate about its central axle 402. Whilst circular-drive outlet 404 is fixed relative to the circular driving plate 401, and therefore only rotates about central axle 402 when the circular driving plate 401 rotates, planetary-drive outlet 403 also rotates about its own central axis at the same time as it rotates about central axle 402.

Fig. 21 shows the stir tool in attachment with the circular drive-outlet 402 of the drive outlet 400 of a food processing appliance 600 (in this case a C-shaped stand-mixer). The drive outlet 400 is supported by the base 500, which includes control knobs 501 for controlling the speed of rotation of the stir tool 300, and a user interface 502 for receiving and displaying information and instructions to users. A motor for driving the drive outlet may be located in the base 500, and the base 500 may also have an integral heating or cooling means (e.g., an induction heater) for heating any containers attached to the base 500.

Whilst the adjustment wheel 310 has been described as being turned manually, the adjustment wheel 310 could instead be driven by an electric motor. In this case the outside surface of the adjustment wheel 310 would instead have teeth that would interface with a gear driven by an electric motor located either on the stir tool 300 or within the food processing appliance. Where the electric motor is located on the stir tool 300 the stir tool 300 may further include electric contacts to pick up electrical power for the motor from the food processing appliance 600, or have an integral battery for powering the motor. Where the motor is located within the food processing appliance 600, a drive-shaft may depend downwardly from the drive outlet 400 to drive the adjustment wheel 310. The motor may be controlled by a CPU located within the food processing appliance 600 according to user instructions inputted into the user interface 600, and/or according to signals received by the CPU from a sensor that detects a tag (e.g., an RFID tag) of a container attached to the container identifying the desired extension distance of the stir tool 300.

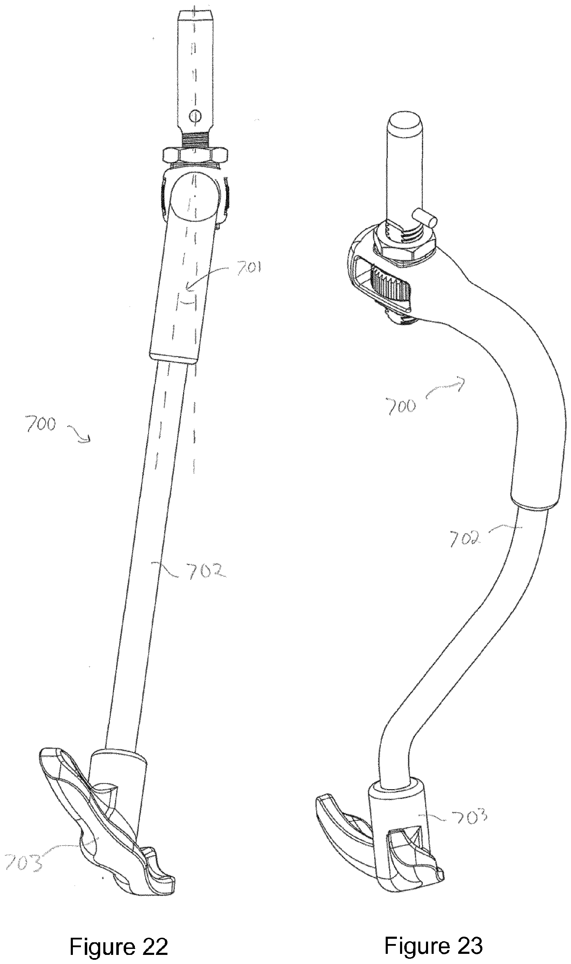

Referring now to Figures 22 and 23, in another embodiment the stir tool 700 is similar in shape to the stir tool 300 shown in Figure 17, but bends or is inclined backwardly slightly at a small angle 701 (in this example by about 7 degrees) away from the direction of rotation, in a direction from the connector towards the foot. This may assist in driving material being stirred downwardly in the bowl, since the face of the body 702 and foot 703 which contact the food are thus angled slightly downwardly. This is to reduce the tendency for the material being processed to be propelled out of the bowl.

Whilst the invention has been described in the field of domestic food processing and preparation machines, it can also be implemented in any field of use where efficient, effective and convenient preparation and/or processing of material is desired, either on an industrial scale and/or in small amounts. The field of use includes the preparation and/or processing of: chemicals; pharmaceuticals; paints; building materials; clothing materials; agricultural and/or veterinary feeds and/or treatments, including fertilisers, grain and other agricultural and/or veterinary products; oils; fuels; dyes; cosmetics; plastics; tars; finishes; waxes; varnishes; beverages; medical and/or biological research materials; solders; alloys; effluent; and/or other substances.

The invention described here may be used in any kitchen appliance and/or as a stand-alone device. This includes any domestic food-processing and/or preparation machine, including both top-driven machines (e.g., stand-mixers) and bottom-driven machines (e.g., food processors). It may be implemented in heated and/or cooled machines. The invention may also be implemented in both handheld (e.g., hand blenders) and table-top (e.g., blenders) machines. It may be used in a machine that is built-in to a work-top or work surface, or in a stand-alone device. The invention can also be implemented as a stand-alone device, whether motor-driven or manually powered.

## Claims

1. A stir tool (300) for a food processing appliance (600), the stir tool comprising:
an elongate body (301) having a scraping foot (302) at a distal end for scraping working medium from the inside of a container (128) of the food processing appliance, and an attachment mechanism (303) comprising a connector (303a) at a proximal end for removably attaching the stir tool to a drive outlet (400) of the food processing appliance to receive drive; and an adjustment mechanism (303b) for varying a distance between the connector and the scraping foot (302), the stir tool comprising first (304) and second (301) members which are relatively moveable by way of the adjustment mechanism, **characterized in that** the adjustment mechanism comprises a threaded element (307) associated with the first member and having a first thread, and an adjustment wheel (311) associated with the second member and having a second thread that engages with the first thread such that rotation of the adjustment wheel causes relative axial movement between the first and second member along the threaded element; thereby causing variation of the distance between the scraping foot and the connector, and further comprising a locking element (306) for selectively locking the adjustment mechanism to prevent the variation of the distance between the connector and the scraping foot.

2. The stir tool of claim 1, wherein at least a portion of the elongate body is backwardly inclined in an axial direction from the connector towards the foot, such that the scraping foot is laterally offset from the connector.

3. The stir tool of claim 1 or 2, wherein the threaded element extends into an aperture (312) of the second member, and wherein the threaded element and the aperture are correspondingly shaped so as to prevent relative rotation of the threaded element and the second member.

4. The stir tool of claim 1, 2 or 3, wherein the locking element is selected from one of a locking nut, a clamp, and a pin that grips or applies pressure to the adjustment wheel to prevent its rotation.

5. The stir tool of any preceding claim, wherein the elongate body comprises an upper body which is substantially S or C shaped, the attachment mechanism (303) being at the upper end of the upper body and the foot being at the lower end of the upper body, the upper body and the foot forming a member which is relatively movable in relation to the adjustment mechanism.

6. The stir tool of claim 5, in which the upper body is formed of a resilient material.

7. The stir tool of any preceding claim, in which the connector is spring loaded by a resilient element configured to push the foot against the container.

8. The stir tool of any of claims 1 to 5, wherein the elongate body comprises an upper body formed of a rigid metal such as, for example, stainless steel.

9. The stir tool of claim 8, wherein the elongate body comprises an upper body which is partly or wholly over-moulded with a heat-resistant plastic to facilitate handling.

10. The stir tool of any preceding claim wherein the foot is made of a heat-resistant plastic material such as a polyetherimide.

11. A food processing appliance comprising the tool of any of the preceding claims.

12. The food processing appliance of claim 11 further comprising a processor, a user interface in electronic communication with the processor, a sensor in electronic communication with the processor for detecting information stored on a tag of a container attached to the food processing appliance, and a motor for driving the adjustment wheel to rotate that is controlled by the processor, wherein the processor controls the motor according to one of: user input received from the user interface; and information stored on a tag of a container attached to the food processing appliance received by the sensor and transmitted to the processor.

## Patentansprüche

1. Rührwerkzeug (300) für eine Lebensmittelverarbeitungsvorrichtung (600), wobei das Rührwerkzeug umfasst:
einen länglichen Körper (301), der an einem distalen Ende einen Schabfuß (302) zum Abschaben von Arbeitsmedium aus dem Inneren eines Behälters (128) der Lebensmittelverarbeitungsvorrichtung aufweist, und einen Befestigungsmechanismus (303), der ein Verbindungsstück (303a) an einem proximalen Ende umfasst, um das Rührwerkzeug abnehmbar an einem Antriebsauslass (400) der Lebensmittelverarbeitungsvorrichtung zu befestigen, um einen Antrieb aufzunehmen; und einen Einstellmechanismus (303b) zum Variieren eines Abstands zwischen dem Verbindungsstück und dem Schabfuß (302), wobei das Rührwerkzeug ein erstes (304) und ein zweites (301) Glied umfasst, die durch den Einstellmechanismus relativ beweglich sind, **dadurch gekennzeichnet, dass** der Einstellmechanismus ein dem ersten Glied zugeordnetes Gewindeelement (307) umfasst, das ein erstes Gewinde aufweist, und ein Einstellrad (311), das dem zweiten Glied zugeordnet ist und ein zweites Gewinde aufweist, das mit dem ersten Gewinde in Eingriff steht, so dass eine Drehung des Einstellrads eine relative axiale Bewegung zwischen dem ersten und dem zweiten Glied entlang des Gewindeelements bewirkt, wodurch eine Veränderung des Abstands zwischen dem Schabfuß und dem Verbindungsstück bewirkt wird, und das ferner ein Verriegelungselement (306) zum selektiven Verriegeln des Einstellmechanismus umfasst, um die Veränderung des Abstands zwischen dem Verbindungsstück und dem Schabfuß zu verhindern.

2. Rührwerkzeug nach Anspruch 1, wobei mindestens ein Abschnitt des länglichen Körpers in einer axialen Richtung vom Verbindungsstück zum Fuß hin rückwärts geneigt ist, so dass der Schabfuß seitlich von dem Verbindungsstück versetzt ist.

3. Rührwerkzeug nach Anspruch 1 oder 2, wobei sich das Gewindeelement in eine Öffnung (312) des zweiten Glieds erstreckt und wobei das Gewindeelement und die Öffnung entsprechend geformt sind, um eine relative Drehung des Gewindeelements und des zweiten Glieds zu verhindern.

4. Rührwerkzeug nach Anspruch 1, 2 oder 3, wobei das Verriegelungselement ausgewählt ist aus einer Sperrmutter, einer Klemme und einem Stift, der das Einstellrad ergreift oder Druck darauf ausübt, um seine Drehung zu verhindern.

5. Rührwerkzeug nach einem der vorhergehenden Ansprüche, wobei der längliche Körper einen oberen Körper umfasst, der im Wesentlichen S- oder C-förmig ist, wobei sich der Befestigungsmechanismus (303) am oberen Ende des oberen Körpers und der Fuß am unteren Ende des oberen Körpers befindet, wobei der obere Körper und der Fuß ein Glied bilden, das in Bezug auf den Einstellmechanismus relativ beweglich ist.

6. Rührwerkzeug nach Anspruch 5, bei dem der obere Körper aus einem elastischen Material besteht.

7. Rührwerkzeug nach einem der vorhergehenden Ansprüche, wobei das Verbindungsstück durch ein elastisches Element, das dafür konfiguriert ist, den Fuß gegen den Behälter zu drücken, federbelastet ist.

8. Rührwerkzeug nach einem der Ansprüche 1 bis 5, wobei der längliche Körper einen oberen Körper umfasst, der aus einem starren Metall, wie z.B. rostfreiem Stahl, besteht.

9. Rührwerkzeug nach Anspruch 8, wobei der längliche Körper einen oberen Körper umfasst, der ganz oder teilweise mit einem hitzebeständigen Kunststoff übergossen ist, um die Handhabung zu erleichtern.

10. Rührwerkzeug nach einem der vorhergehenden Ansprüche, wobei der Fuß aus einem hitzebeständigen Kunststoffmaterial, wie z.B. Polyetherimid, besteht.

11. Lebensmittelverarbeitungsvorrichtung, die das Werkzeug nach einem der vorhergehenden Ansprüche umfasst.

12. Lebensmittelverarbeitungsvorrichtung nach Anspruch 11, die ferner Folgendes umfasst: einen Prozessor, eine Benutzerschnittstelle, die elektronisch mit dem Prozessor verbunden ist, einen Sensor, der elektronisch mit dem Prozessor verbunden ist, um Informationen zu erfassen, die auf einem Etikett eines an der Lebensmittelverarbeitungsvorrichtung angebrachten Behälters gespeichert sind, und einen Motor, der das Einstellrad zum Drehen antreibt und von dem Prozessor gesteuert wird, wobei der Prozessor den Motor in Abhängigkeit von einem der Folgenden steuert: Benutzereingaben, die von der Benutzerschnittstelle empfangen werden, und Informationen, die auf einem Etikett eines an der Lebensmittelverarbeitungsvorrichtung angebrachten Behälters gespeichert sind, die von dem Sensor empfangen und an den Prozessor übertragen werden.

## Revendications

1. Outil de remuage (300) pour un appareil électro-ménager de traitement des aliments (600), l'outil de remuage comprenant :
un corps allongé (301) ayant un pied de raclage (302) au niveau d'une extrémité distale pour racler le milieu de travail depuis la face intérieure d'un contenant (128) de l'appareil électro-ménager de traitement des aliments, et un mécanisme d'attache (303) comprenant un raccord (303a) au niveau d'une extrémité proximale pour attacher de manière amovible l'outil de remuage à une sortie d'entraînement (400) de l'appareil électro-ménager de traitement des aliments pour recevoir un entraînement; et un mécanisme d'ajustement (303b) pour faire varier une distance entre le raccord et le pied de raclage (302), l'outil de remuage comprenant des premier (304) et deuxième (301) membres qui sont relativement mobiles par l'intermédiaire du mécanisme d'ajustement, **caractérisé en ce que** le mécanisme d'ajustement comprend un élément fileté (307) associé au premier membre et ayant un premier filetage, et une roue d'ajustement (311) associée au deuxième membre et ayant un deuxième filetage qui se met en prise avec le premier filetage de telle sorte qu'une rotation de la roue d'ajustement provoque un mouvement axial relatif entre les premier et deuxième membres le long de l'élément fileté; ce qui provoque une variation de la distance entre le pied de raclage et le raccord, et comprenant en outre un élément de verrouillage (306) pour verrouiller sélectivement le mécanisme d'ajustement afin d'empêcher la variation de la distance entre le raccord et le pied de raclage.

2. Outil de remuage de la revendication 1, où au moins une portion du corps allongé est inclinée vers l'arrière suivant une direction axiale à partir du raccord vers le pied, de telle sorte que le pied de raclage soit décalé latéralement par rapport au raccord.

3. Outil de remuage de la revendication 1 ou 2, où l'élément fileté s'étend dans une ouverture (312) du deuxième membre, et où l'élément fileté et l'ouverture sont façonnés de manière correspondante de sorte à empêcher une rotation relative de l'élément fileté et du deuxième membre.

4. Outil de remuage de la revendication 1, 2 ou 3, où l'élément de verrouillage est sélectionné parmi un poste parmi un écrou de blocage, une pince, et une broche qui agrippe, ou applique une pression à, la roue d'ajustement afin d'empêcher sa rotation.

5. Outil de remuage de n'importe quelle revendication précédente, où le corps allongé comprend un corps supérieur qui a substantiellement une forme en S ou en C, le mécanisme d'attache (303) se trouvant au niveau de l'extrémité supérieure du corps supérieur et le pied se trouvant au niveau de l'extrémité inférieure du corps supérieur, le corps supérieur et le pied formant un membre qui est relativement mobile relativement au mécanisme d'ajustement.

6. Outil de remuage de la revendication 5, dans lequel le corps supérieur est formé en une matière élastique.

7. Outil de remuage de n'importe quelle revendication précédente, dans lequel le raccord est chargé par ressort par un élément élastique configuré pour pousser le pied contre le contenant.

8. Outil de remuage de n'importe lesquelles des revendications 1 à 5, où le corps allongé comprend un corps supérieur formé en un métal rigide tel, par exemple, l'acier inoxydable.

9. Outil de remuage de la revendication 8, où le corps allongé comprend un corps supérieur qui est partiellement ou entièrement surmoulé avec une matière plastique résistant à la chaleur afin de faciliter la manipulation.

10. Outil de remuage de n'importe quelle revendication précédente où le pied est fabriqué en une matière plastique résistant à la chaleur telle un polyétherimide.

11. Appareil électro-ménager de traitement des aliments comprenant l'outil de n'importe lesquelles des revendications précédentes.

12. Appareil électro-ménager de traitement des aliments de la revendication 11 comprenant en outre un processeur, une interface d'utilisateur en communication électronique avec le processeur, un capteur en communication électronique avec le processeur pour détecter des informations stockées sur une balise d'un contenant attaché à l'appareil électro-ménager de traitement des aliments, et un moteur pour entraîner la roue d'ajustement pour la faire tourner laquelle est commandée par le processeur, où le processeur commande le moteur en fonction d'une opération parmi: une saisie d'utilisateur reçue à partir de l'interface d'utilisateur; et des informations stockées sur une balise d'un contenant attaché à l'appareil électro-ménager de traitement des aliments reçues par le capteur et transmises au processeur.
